# EUROPÄISCHE PATENTSCHRIFT

(11) **EP 4 364 259 B1**
(45) Veröffentlichungstag und Bekanntmachung des Hinweises auf die Patenterteilung: **20.08.2025**
(21) Anmeldenummer: 22754320.4
(22) Anmeldetag: 18.07.2022
(51) Int. Cl.: H02J 1/00, H02J 5/00, H02S 10/00

(54) **MITTELSPANNUNGSANORDNUNG VON SOLARMODULEN UND STROMRICHTER**
MEDIUM VOLTAGE ASSEMBLY OF SOLAR MODULES AND POWER CONVERTER
AGENCEMENT MOYENNE TENSION DES MODULES SOLAIRES ET CONVERTISSEUR

(30) Priorität: 16.09.2021 EP 21197189
(43) Veröffentlichungstag der Anmeldung: 08.05.2024
(73) Patentinhaber: Innomotics GmbH, 90441 Nürnberg (DE)
(72) Erfinder: SPAHIC, Ervin, 91052 Erlangen (DE); BARUSCHKA, Lennart, 30900 Wedemark (DE)
(74) Vertreter: Michalski Hüttermann & Partner Patentanwälte mbB
(86) Internationale Anmeldenummer: PCT/EP2022/069996
(87) Internationale Veröffentlichungsnummer: WO 2023/041222

(56) Entgegenhaltungen:
- EP-B1- 2 386 121
- ARANEO RODOLFO ET AL: "On the Insulation Resistance in High-Power Free-Field Grid-Connected Photovoltaic Plants", 2019 IEEE INTERNATIONAL CONFERENCE ON ENVIRONMENT AND ELECTRICAL ENGINEERING AND 2019 IEEE INDUSTRIAL AND COMMERCIAL POWER SYSTEMS EUROPE (EEEIC / I&CPS EUROPE), IEEE, 11 June 2019 (2019-06-11), pages 1 - 6, XP033587490, DOI: 10.1109/EEEIC.2019.8783919
- REDI P ED - LUQUE A ET AL: "CONSIDERATIONS ABOUT THE DESIGN OF PV MODULES FOR CENTRAL POWER PLANTS", TENTH E.C. PHOTOVOLTAIC SOLAR ENERGY CONFERENCE. PROCEEDINGS OF THE INTERNATIONAL CONFERENCE; 8-12 APRIL 1991; LISBON, PORTUGAL; [PROCEEDINGS OF THE INTERNATIONAL PHOTOVOLTAIC SOLAR ENERGY CONFERENCE], DORDRECHT, KLUWER ACADEMIC PUBLISHERS, NL, vol. CONF. 10, 8 April 1991 (1991-04-08), pages 959 - 962, XP001135856, ISBN: 978-0-7923-1389-2

## Beschreibung

Die Erfindung betrifft eine Solareinheit, aufweisend eine Vielzahl von Solarmodulen und eine Trägereinheit, wobei die Solarmodule bezüglich ihrer Isolationsfestigkeit eine Isolationsgleichspannung, insbesondere eine Isolationsgleichspannung von bis zu 1,5kV DC, aufweisen. Die Erfindung betrifft weiter eine Solargruppeneinheit, wobei die Solargruppeneinheit mindestens zwei derartige Solareinheiten aufweist, wobei die Solareinheiten bezüglich ihrer ersten Anschlüsse und zweiten Anschlüsse elektrisch in Reihe angeordnet sind. Ferner betrifft die Erfindung eine Solarerzeugungseinheit, aufweisend einen Stromrichter sowie mindestens eine derartige Solareinheit und/oder mindestens eine derartige Solargruppeneinheit. Die Erfindung betrifft darüber hinaus ein Solarerzeugungssystem, aufweisend mindestens eine derartige Solarerzeugungseinheit, einen Netzanschlusspunkt zur Verbindung der Solarerzeugungseinheit mit einem Energieversorgungsnetz und einen Transformator. Des Weiteren betrifft die Erfindung ein Verfahren zum Einspeisen von elektrischer Energie in ein Energieversorgungsnetz mittels einer derartigen Solareinheit, einer derartigen Solargruppeneinheit, einer derartigen Solarerzeugungseinheit oder eines derartigen Solarerzeugungssystem.

Solarmodule, auch als Photovoltaic (PV) Module oder Photovoltaic Panele bezeichnet, werden zur Gewinnung von elektrischer Energie aus Sonnenlicht in Serie geschaltet, so dass sich die Spannung der Module addiert. Mehrere in Serie geschaltete Solarmodule bilden einen PV-String. Die Spannung von PV-Strings ist heutzutage im Bereich von mehreren hundert Volt Gleichspannung. Dabei werden die Gehäuse der PV-Panele bzw. deren Gerüste/Gestelle geerdet.

Ein oder mehrere PV-Strings werden an einen oder mehreren Stromrichtern angeschlossen, der oder die aus der Gleichspannung der Solarmodule an seinem jeweiligen Ausgang eine AC

Niederspannung erzeugt bzw. erzeugen und diese dann am Netzanschluss bereitstellt (typischerweise 0,4-0,69 kV). Der Punkt, an dem der Netzanschluss erfolgt, wird auch als Netzanschlusspunkt bezeichnet.

Die Solarmodule weisen eine Isolationsfestigkeit auf. Dabei handelt es sich um eine elektrische Isolationsfähigkeit zwischen den elektrischen Anschlüssen des Solarmoduls, an denen die aus Sonnenlicht erzeugte elektrische Energie zur Verfügung steht, und dem Gehäuse des Solarmoduls oder einer Trägereinheit, auf oder an der die Solarmodule, insbesondere die Gehäuse dieser Solarmodule, angeordnet sind. Die Isolationsfähigkeit wird durch eine Spannung angegeben, die zwischen den elektrischen Anschlüssen des Solarmoduls und dem Gehäuse bzw. der Trägereinheit anstehen kann, ohne dass es zu einem Stromfluss, bzw. nennenswerten Stromfluss, oder Beschädigung der Module kommt. Die maximale Gleichspannung, die zwischen einem der elektrischen Anschlüsse des Solarmoduls und dem Gehäuse bzw. der Trägereinheit anstehen darf, wird als Isolationsgleichspannung bezeichnet. Typische Isolationsgleichspannungen heutiger Solarmodule betragen bis zu 1,5kV DC.

Die EP2386121B1 offenbart eine Photovoltaik-Einrichtung zur Hochspannungserzeugung, wobei Photovoltaik-Module zu einem Modul-Block verschaltet sind, der über Isolierungselemente gegen das Erdpotential isoliert ist.

Der Erfindung liegt die Aufgabe zugrunde, eine Anordnung zur Einspeisung von Solarenergie in ein Energieversorgungsnetz, insbesondere für hohe Leistungen, zu verbessern.

Diese Aufgabe wird durch eine Solargruppeneinheit gelöst, wobei die Solargruppeneinheit mindestens zwei Solareinheiten mit jeweils einem ersten Anschluss und einem zweiten Anschluss aufweist, wobei die Solareinheiten jeweils eine Vielzahl von Solarmodulen und eine Trägereinheit aufweisen, wobei die Solarmodule bezüglich ihrer Isolationsfestigkeit eine Isolationsgleichspannung, insbesondere eine Isolationsgleichspannung von bis zu 1,5kV DC, aufweisen, wobei die Solarmodule zwischen dem ersten Anschluss und dem zweiten Anschluss in einer Reihenschaltung angeordnet sind, wobei ein Anschlusspunkt derart an einer elektrischen Verbindung zwischen zwei der in der Reihenschaltung angeordneten Solarmodule angeordnet ist, dass der Betrag einer ersten durch die zwischen dem ersten Anschluss und dem Anschlusspunkt angeordneten Solarmodule erzeugbaren Spannung und der Betrag einer zweiten durch die zwischen dem zweiten Anschluss und dem Anschlusspunkt angeordneten Solarmodule erzeugbaren Spannung jeweils kleiner ist als die Isolationsgleichspannung, wobei die Solarmodule in oder an der Trägereinheit angeordnet sind, wobei die Trägereinheit zumindest teilweise elektrisch leitfähig ausgebildet ist und mit dem Anschlusspunkt elektrisch leitend verbunden ist, wobei die Solareinheiten bezüglich ihrer ersten Anschlüsse und zweiten Anschlüsse elektrisch in Reihe angeordnet sind, wobei die Trägereinheiten der jeweiligen Solarmodule mittels eines Isolators elektrische isoliert zueinander angeordnet sind. Die Aufgabe wird weiter durch eine Solarerzeugungseinheit, aufweisend einen Stromrichter sowie mindestens eine derartige Solargruppeneinheit gelöst, wobei der Stromrichter als Mittelspannungsstromrichter ausgebildet ist, und eine Gleichspannungsseite und eine Wechselspannungsseite aufweist, wobei die Solareinheit und/oder die Solargruppeneinheit mit der Gleichspannungsseite des Stromrichters elektrisch verbunden ist. Die Aufgabe wird ferner durch ein Solarerzeugungssystem, aufweisend mindestens eine derartige Solarerzeugungseinheit, einen Netzanschlusspunkt zur Verbindung der Solarerzeugungseinheit mit einem Energieversorgungsnetz und einen Transformator gelöst, wobei der Transformator mit der Wechselspannungsseite des Stromrichters und mit dem Netzanschlusspunkt verbunden ist. Weiter wird diese Aufgabe durch ein Verfahren zum Einspeisen von elektrischer Energie mittels einer derartigen Solargruppeneinheit, einer derartigen Solarerzeugungseinheit oder eines derartigen Solarerzeugungssystems gelöst, wobei eine durch die Solarmodule erzeugte elektrische Energie mittels einer Wechselspannung im Mittelspannungsbereich in ein Energieversorgungsnetz eingespeist wird.

Weitere vorteilhafte Ausgestaltungen der Erfindung sind in den abhängigen Ansprüchen angegeben.

Der Erfindung liegt unter anderem die Erkenntnis zugrunde, dass sich die Anordnung von Solarmodulen verbessern lässt und sich damit verteilhafte Anordnungen für die Energiegewinnung mit diesen Solarmodulen ergeben. Durch den Verzicht auf die Erdung von Solarmodulen und/oder deren Trägereinheiten ergeben sich Vorteile, insbesondere für PV-Parks, also Energieerzeugungsanlagen auf der Basis von PV Modulen, mit einer Leitung von mehr als 100 MW.

Die Solareinheit weist zwischen dem ersten Anschluss und dem zweiten Anschluss eine Reihenschaltung von Solarmodulen auf. Dabei sind die Solarmodule an ihren Solarmodulanschlüssen, an denen die aus Sonnenlicht generierte, elektrische Leistung verfügbar ist, in einer Reihenschaltung angeordnet.

Dabei wird die aus Sonnenlicht erzeugte elektrische Energie mittels eines Mittelspannungsstromrichters beispielsweise einem Energieversorgungsnetz, elektrischen Verbrauchern oder einem Energiespeicher zur Verfügung gestellt. Dabei wandelt der Mittelspannungswechselrichter die Spannung der Solarmodule in eine Wechselspannung um. Mit anderen Worten wird die durch die Solarmodule erzeugte elektrische Energie durch den Mittelspannungswechselrichter derart bearbeitet, dass sie mittels einer Wechselspannung übertragen werden kann. Diese Wechselspannung hat einen Effektivwert oder eine Amplitude von mehr als 1000 V. Durch Variation der Spannung in Amplitude und Phasenlage kann der Mittelspannungsstromrichter die Übertragung der Wirkleistung und der Blindleistung unabhängig voneinander steuern oder regeln. Dabei werden die Solarmodule an oder in Trägereinheiten angeordnet. Diese Trägereinheiten bilden jeweils ein elektrisches Potential. Dieses wird vom Erdpotential beispielsweise mittels eines Isolators an der Trägereinheit, der im Folgenden zur Unterscheidung von anderen Isolatoren als Trägerisolator bezeichnet wird, isoliert. Mittels des Anschlusspunktes in der Reihenschaltung von Solarmodulen wird das Potential der jeweiligen Trägereinheit festgelegt. Mit anderen Worten wird das elektrische Potential der jeweiligen Trägereinheiten mit dem Anschlusspunkt elektrisch verbunden. Da sich dadurch die Potentiale der jeweiligen Trägereinheiten unterscheiden, sind die Trägereinheiten jeweils isoliert zueinander angeordnet. Das geschieht durch einen Isolator, wobei der Isolator eine Isolationsspannung aufweisen, die größer oder gleich ist wie die doppelte Isolationsgleichspannung der Solarmodule. Dieser Isolator ist zwischen zwei der Trägereinheiten angeordnet. Beträgt die Isolationsspannung der Solarmodule beispielsweise 1,5 kV DC, so weisen die Isolatoren, die zwischen zwei Trägereinheiten angeordnet sind, eine Isolationsspannung von mindestens 3 kV auf.

Durch die Isolatoren zwischen den Trägereinheiten kann sichergestellt werden, dass die beiden über einen Isolator verbundenen Trägereinheiten eine vorgegebene Spannung zueinander nicht überschreiten. Dies garantiert, dass die Trägerisolatoren nicht überlastet, das heißt mit einer unzulässig hohen Spannung beaufschlagt werden. Die Trägerisolatoren stellen die elektrische Isolation der Solarmodule zu den berührbaren Teilen der Anlage dar. Ein Defekt bei den Trägerisolatoren bringt somit das Risiko der Gefährdung von Personen mit sich. Durch die vorhandenen Isolatoren zwischen den Trägereinheiten würden diese im Fehlerfall aufgrund der gegenüber den Trägerisolatoren geringeren Isolationsspannung zuerst versagen. Dieses Versagen kann zuverlässig erkannt werden. Die Solargruppeneinheit kann dann in einen betriebssicheren Zustand überführt werden. Dazu werden beispielsweise die Spannungen reduziert, einzelnen Solarmodule abgeschaltet oder überbrückt, oder die Solargruppeneinheit abgeschaltet.

Es hat sich darüber hinaus als vorteilhaft erwiesen, parallel zum Isolator zwischen den Trägereinheiten einen Spannungsbegrenzer wie beispielsweise einen Varistor anzuordnen. Die Auslöseschwelle des Varistors kann dann oberhalb der Isolationsspannung des Isolators, beispielsweise im Bereich vom 1,1-bis 1,3-fachen der Isolationsspannung, festgelegt werden. Bei einem Ausfall des Isolators haben die beiden über diesen Isolator verbundenen Trägereinheiten dann ein definiertes Potential zueinander. Damit ist ein Weiterbetrieb der Solargruppeneinheit möglich.

Für den Fall, dass für den Isolator zwischen den Trägereinheiten die doppelte zwischen den Anschlüssen der Reihenschaltung vorkommenden Betriebsspannung als Isolationsspannung vorgesehen wird und der Anschlusspunkt mittig in der Reihenschaltung angeordnet ist, kann auch bei Ausfall eines Isolators die Solargruppeneinheit weiter bei voller Leistung betrieben werden. Gleichzeitig wird der Berührschutz zuverlässig sichergestellt, da die Trägerisolatoren nicht überlastet werden. Gleichzeitig ist es möglich, die Trägerisolatoren auf die erforderliche Isolationsfähigkeit auszulegen. Da diese nicht nur die Isolationsfähigkeit aufweisen müssen, sondern darüber hinaus auch noch mechanische Anforderungen an die Statik erfüllen müssen, sind diese im Vergleich zu den Isolatoren zwischen den Trägereinheiten vergleichsweise teuer. Durch die gleichzeitige Verwendung der Isolatoren zwischen den Trägereinheiten nehmen die Anforderungen an die Isolationsfestigkeit der Trägerisolationen deutlich ab, ohne die Berührsicherheit des Solarerzeugungssystems oder der Solarerzeugungseinheit zu beeinträchtigen.

Der Anschlusspunkt ist dabei derart in der Reihenschaltung zwischen zwei der Solarmodule der jeweiligen Solareinheit angeordnet, dass die Spannung, die zwischen dem Anschlusspunkt und einem der elektrischen Anschlüsse, also dem ersten Anschluss oder dem zweiten Anschluss, der jeweiligen Solareinheit maximal anliegen kann, kleiner oder gleich ist wie die Isolationsgleichspannung der Solarmodule. Damit ist es möglich, eine Reihenschaltung von Solarmodulen in einer Solargruppeneinheit zu erzeugen, wobei die Spannung der Reihenschaltung aller Solarmodule der Solargruppeneinheit die Isolationsgleichspannung, das Doppelte der Isolationsgleichspannung und sogar ein Vielfaches der Isolationsgleichspannung der einzelnen Solarmodule übersteigt. Somit liegt zwischen jedem Solarmodul, bzw. jedem Anschluss des Solarmoduls und der Trägereinheit eine Spannung an, die kleiner oder maximal gleich der Isolationsgleichspannung der einzelnen Solarmodule ist. Die Solareinheit ist somit nicht geerdet. Das Potential der Trägereinheit ist dabei durch den Anschlusspunkt der Solareinheit vorgegeben. Es weicht in der Regel vom Erdpotential ab. Das Potential der Trägereinheit ist somit gegenüber dem Erdpotential, insbesondere mittels eines oder mehrerer Trägerisolatoren, isoliert ausgeführt.

Die vorgeschlagene Anordnung ermöglicht bei gleicher Isolationsgleichspannung der Solarmodule eine Reihenschaltung von mehr Solarmodulen, gegenüber einer Anordnung, bei der eine Tragstruktur der Solarmodule geerdet ist. Durch diese höhere Anzahl von Solarmodulen ist der Betrieb mit einem Mittelspannungsstromrichter möglich. Dabei kann die Spannung an der Gleichspannungsseite des Mittelspannungsstromrichters eine Spannung von mehr als 1,5 kV annehmen. Durch die höhere Spannung des Mittelspannungsstromrichters gegenüber einem Niederspannungsstromrichter wie er heutzutage zum Einsatz kommt, reduzieren sich die Ströme bei gleicher zu übertragender Leistung. Mit anderen Worten kann bei gleichen Strömen mittels des Mittelspannungsstromrichters eine höhere Leistung übertragen werden. Wenn geringere Ströme zum Einsatz kommen, reduzieren sich die Verluste der Energieerzeugung und eine derartige Solarerzeugungseinheit sowie ein derartiges Solarerzeugungssystem hat aufgrund der geringeren Ströme und damit einhergehenden geringeren Verluste einen besonders hohen Wirkungsgrad.

Besonders vorteilhaft ist daher die Anwendung der vorgeschlagenen Anordnung für große PV-Parks im Bereich von mehr als 100 MW. Dort entstehen bei der Verwendung von Niederspannungsstromrichtern sehr hohe Ströme. Die geringeren Ströme der vorgeschlagenen Solarerzeugungseinheit ermöglichen auch die Anordnung der Komponenten der Solarerzeugungseinheit mit größerer Entfernung zum Netzanschlusspunkt. Die Wechselspannung des Mittelspannungsstromrichters kann derart hoch gewählt werden, dass die Verluste für die Übertragung vernachlässigt werden können. Somit sind auch Übertragungsstrecken zwischen Mittelspannungsstromrichter und Netzanschlusspunkt von mehr als 1 km und sogar von mehr als 10 km problemlos realisierbar. Mit anderen Worten ist die Anordnung besonders vorteilhaft, wenn der räumliche Abstand zwischen Mittelspannungsstromrichter und Netzanschlusspunkt größer als 1 km, insbesondere größer als 10 km, ist. Auf zusätzliche Transformatoren zur Überbrückung dieser Strecke kann verzichtet werden. Bei einem PV Park mit einer Einspeiseleistung von mehr als 100 MW ergibt sich daraus eine Einsparung einer Vielzahl von kostspieligen Transformatoren.

Gleichzeitig sind die Anforderungen an die Isolationsfestigkeit der einzelnen Solarmodule gering. Eine Isolationsgleichspannung der verwendeten Solarmodule von beispielsweise 1,5 kV DC, wie sie bereits heute in hoher Stückzahl am Markt verfügbar sind, ist für die vorgeschlagene Anordnung geeignet, um eine Reihenschaltung von Solarmodulen zu realisieren, die auf der Gleichspannungsseite mit dem Mittelspannungsstromrichter verbunden sind und auf der Wechselspannungsseite eine Spannung im Mittelspannungsbereich erzeugen. Der durch die vorgeschlagene Anordnung mögliche Verzicht auf eine höhere Isolationsfestigkeit der Solarmodule macht die vorgeschlagene Lösung neben dem hohen Wirkungsgrad gleichzeitig besonders kostengünstig. Darüber hinaus können auch Kabel für die Bildung der Reihenschaltung zum Einsatz kommen, indem die Kabel die Anschlüsse der Solarmodule zu der Reihenschaltung verbinden. Die dabei verwendeten Kabel müssen nur für eine Gleichspannung im Niederspannungsbereich, insbesondere für eine Gleichspannung bis zu 1,5 kV, bemessen sein. Auf den kostspieligen Einsatz von Mittelspannungskabeln, also von Kabeln mit einer Isolationsfestigkeit von mehr als 1,5 kV kann verzichtet werden.

Die Erfindung basiert unter anderem auf der Erkenntnis, dass es vorteilhaft ist, die Trägereinheit des Solarmoduls gegenüber dem Erdpotential zu isolieren. Mit anderen Worten wird das Solarmodul im isolierten Modus, der auch als floating Modus bezeichnet werden kann, angeordnet und betrieben. Die Stützer, an denen die Trägereinheit montiert sein kann und die Trägereinheit in seiner räumlichen Lage fixiert, können in vorteilhafterweise Weise zumindest teilweise durch einen Mittelspannungsisolator realisiert werden. Mit anderen Worten wird der Trägerisolator durch einen Mittelspannungsisolator gebildet. Dabei hat es sich je nach abzudeckenden Leistungsbereich der Solareinheit, der Solargruppeneinheit, der Solarerzeugungseinheit und/oder des Solarerzeugungssystems als vorteilhaft erwiesen, Mittelspannungsisolatoren einzusetzen, die für die Isolation zwischen 1,5 kV DC und 50 kV DC geeignet sind. Die verwendeten Kabel, sowohl zur Herstellung der Reihenschaltung innerhalb der Solareinheit als auch zur Verbindung der Reihenschaltungen unterschiedlicher Solareinheiten, benötigen nur eine Isolationsfestigkeit im Niederspannungsbereich, wie beispielsweise 1,5 kV DC.

Es ist dabei in vorteilhafter Weise ebenfalls möglich, mehrere Solargruppeneinheiten in einer Parallelschaltung anzuordnen und für diese Parallelschaltung mit genau einem Mittelspannungsstromrichter zu verbinden. Die Verbindung der Solargruppeneinheiten erfolgt auf der Gleichspannungsseite des Mittelspannungsstromrichters. Für die Verbindung der Solargruppeneinheiten zu einer Parallelschaltung eignen sich aufgrund der Stromstärke und den Anforderungen an die Isolation insbesondere Stromschienen, auch als Sammelschienen bezeichnet, die gegenüber dem Erdpotential getrennt an weiteren Isolatoren angeordnet und optional auch daran befestigt sind. Zur Unterscheidung dieser anderen Isolatoren wird dieser Isolator als Sammelschienenisolator bezeichnet. Dies hat den Vorteil, dass keine Mittelspannungskabel für Gleichströme erforderlich sind und trotzdem eine besonders einfache und kostengünstige Montage erzielt werden kann. Diese Sammelschienenisolatoren sind dann vorzugsweise als Mittelspannungsisolatoren ausgeführt. Diese haben eine Isolationsspannung von mehr als 1,5 kV DC.

Eine aufwändige Umformung einer Niederspannung in eine Mittelspannung, beispielsweise für die verlustarme Übertragung zu dem Netzanschlusspunkt, insbesondere zu einem mehr als 1 km entfernten Netzanschlusspunkt, kann entfallen, da bereits die Solareinheiten in der vorgeschlagenen Anordnung mit dem Mittelspannungsstromrichter verbunden sind. Damit ist eine verlustarme Übertragung zum Netzanschlusspunkt auch für Verbindungen über 1 km Länge, insbesondere über 10 km Länge, besonders wirtschaftlich möglich.

Die Solareinheiten sind derart ausgeführt, dass durch die Solarmodule der Reihenschaltung einer Solareinheit eine Spannung von maximal 3 kV erzeugbar ist, um die entsprechenden Isolatoren besonders vorteilhaft einsetzen zu können. Zwischen den Trägereinheiten unterschiedlicher Solareinheiten werden dann nur Isolatoren mit einer Isolationsgleichspannung von bis zu 3 kV benötigt.

Als besonders vorteilhaft für die Steuerung und/oder Regelung des Mittelspannungsstromrichters hat es sich erwiesen, wenn ein Transformator des Solarerzeugungssystem die Anschlüsse des Mittelspannungsstromrichters und die Anschlüsse des Netzanschlusspunktes galvanisch voneinander trennt. Dazu ist der Transformator mit einer ersten Wicklung mit dem Mittelspannungsstromrichter und mit einer zweiten Wicklung mit dem Netzanschlusspunkt verbunden. Dadurch wird eine galvanische Trennung zwischen dem der Solargruppeneinheit und dem Energieversorgungsnetz erzielt. Damit treten dann keine oder zumindest nur geringe Potentialsprünge in der Solarerzeugungseinheit und seinen Komponenten auf.

Der Einsatz des Mittelspannungsstromrichters macht die vorgeschlagene Anordnung besonders effizient gegenüber bekannten Lösungen mit Niederspannungsstromrichtern, da der Mittelspannungsstromrichter mehrere Niederspannungsstromrichter ersetzen kann. Ebenso entfällt der Einsatz eines Transformators, der zum Hochsetzen der Ausgangsspannung der Niederspannungsstromrichter auf ein Mittelspannungsniveau dient. Allgemein werden durch die Verwendung des Mittelspannungsstromrichters und der damit einhergehenden höheren Spannung bei gleicher Leistung die Ströme kleiner oder bei gleichen Strömen steigt die Leistungsfähigkeit derartiger Solarerzeugungseinheiten oder derartiger Solarerzeugungssysteme. Dies führt zu niedrigeren Betriebskosten derartiger Anlagen. In Summe weist eine derartige Solarerzeugungseinheit oder ein derartiges Solarerzeugungssystem deutlich weniger Komponenten auf als bekannte Anlagen, insbesondere Anlagen im Bereich einer Leistung von mehr als 100 MW. Die vorgeschlagenen Solarerzeugungseinheiten und -systeme sind daher besonders platzsparend, haben einen geringen Wartungsaufwand und zeichnen sich aufgrund einer geringeren Anzahl von Komponenten durch eine hohe Verfügbarkeit aus. Trotz der Verwendung eines Mittelspannungsstromrichters können durch die vorgeschlagene Anordnung eine Vielzahl von Niederspannungskomponenten verwendet werden, wie etwa Solarmodule und Kabel, die als Niederspannungskomponenten ausgelegt sein können.

Bei einer vorteilhaften Ausgestaltung der Erfindung ist der Anschlusspunkt mittig in Bezug auf die Solarmodule der Reihenschaltung angeordnet. Mit der mittigen Anordnung des Anschlusspunktes kann die maximale Spannung von 3 kV zwischen dem ersten Anschluss und dem zweiten Anschluss des Solarmoduls erzeugt werden. Damit können die Solarmodule der Solareinheit besonders wirtschaftlich ausgenutzt werden. Selbst bei einer geringeren Ausnutzung der Spannung, beispielsweise durch eine geringere Anzahl von Solarmodulen in der Reihenschaltung, ergibt sich der Vorteil, dass zwischen dem ersten Anschluss bzw. dem zweiten Anschluss der Solareinheit und der Trägereinheit eine geringere Spannung ansteht, die zu isolieren ist. Damit erhöht sich unter anderem die Lebensdauer der Solareinheit und ist unabhängiger gegenüber Verschmutzungen, die die Isolationsfähigkeit des Isolators herabsetzen können. Schäden durch fehlerhafte Isolation werden damit wesentlich unwahrscheinlicher. Dies betrifft sowohl die Isolatoren zwischen den Trägereinheiten als auch die Trägerisolatoren, an denen die Trägereinheit befestigt und gegenüber dem Erdpotential isoliert ist.

Unter einer mittigen Anordnung des Anschlusspunktes ist zu verstehen, dass zwischen dem Anschlusspunkt und dem ersten Anschluss die gleiche Anzahl an Solarmodulen angeordnet ist wie zwischen dem Anschlusspunkt und dem zweiten Anschluss. Bei einer ungradzahligen Anzahl von Solarmodulen der Reihenschaltung ist eine mittige Anordnung auch dann gegeben, wenn sich die Anzahl an Solarmodulen zwischen dem Anschlusspunkt und dem ersten Anschluss und die Anzahl an Solarmodulen zwischen dem Anschlusspunkt und dem zweiten Anschluss um ein Solarmodul unterscheiden.

Im Folgenden wird die Erfindung anhand der in den Figuren dargestellten Ausführungsbeispiele näher beschrieben und erläutert. Es zeigen:
- FIG 1: die Elemente einer Solaranlage,
- FIG 2: eine Solareinheit,
- FIG 3: eine Solargruppeneinheit,
- FIG 4: eine Solarerzeugungseinheit,
- FIG 5: ein Solarerzeugungssystem,
- FIG 6: eine Befestigung von Elementen einer Solareinheit und
- FIG 7: eine Befestigung der Sammelschiene.

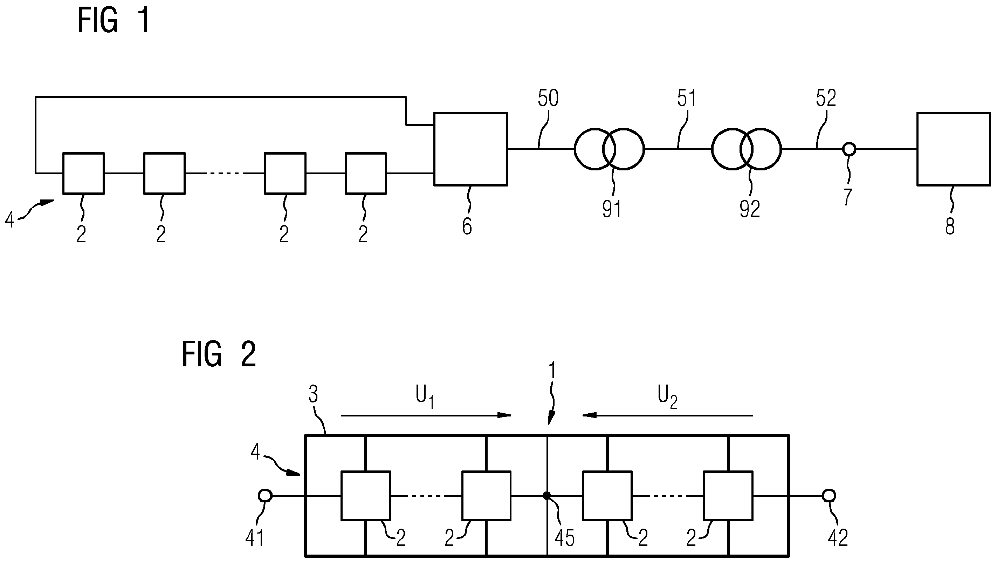

Die FIG 1 zeigt den prinzipiellen Aufbau einer bekannten Solaranlage zur Gewinnung von elektrischer Energie aus Solarmodulen 2. Die Solarmodule 2 werden dabei in einer Reihenschaltung 4 angeordnet. Die Reihenschaltung 4 wird mit der Gleichspannungsseite des Stromrichters 6 verbunden. Die durch den Stromrichter 6 am Ausgang erzeugte Wechselspannung kann beispielsweise über ein Niederspannungskabel 50 an einen ersten Transformator 91 übertragen werden. Dieser kann eine Mittelspannung erzeugen, mit der die erzeugte Energie dann verlustarm auch über längere Distanzen mit Mittelspannungskabeln 51 transportiert werden kann. Am Netzanschlusspunkt 7, bei dem die elektrische Energie in ein Energieversorgungsnetz 8 eingespeist wird, ist noch ein zweiter Transformator 92 vorhanden, der die Mittelspannung in eine Spannung des Energieversorgungsnetzes 8 umformt. Im Energieversorgungsnetz 8 erfolgt die Energieübertragung üblicherweise über Hochspannungsleitungen 52.

Die FIG 2 zeigt eine Solareinheit 1. Die Solareinheit 1 weist zwischen einem ersten Anschluss 41 und einem zweiten Anschluss 42 der Solareinheit 1 eine Reihenschaltung 4 von Solarmodulen 2 auf. Dabei sind die Solarmodule 2 an ihren Solarmodulanschlüssen, an denen die aus Sonnenlicht generierte, elektrische Leistung verfügbar ist, in einer Reihenschaltung angeordnet. Zwischen zwei der Solarmodulen 2 der Reihenschaltung 4 ist ein Anschlusspunkt 45 angeordnet. Die Solarmodule 2 sind in, an oder auf einer Trägereinheit 3 angeordnet. Die Trägereinheit 3 ist zumindest teilweise elektrisch leitfähig ausgebildet und elektrisch mit dem Anschlusspunkt 45 verbunden. Zwischen dem ersten Anschluss 41 und dem Anschlusspunkt 45 ist eine erste Spannung U₁ erzeugbar und zwischen dem zweiten Anschluss 42 und dem Anschlusspunkt 45 ist eine zweite Spannung U₂ erzeugbar.

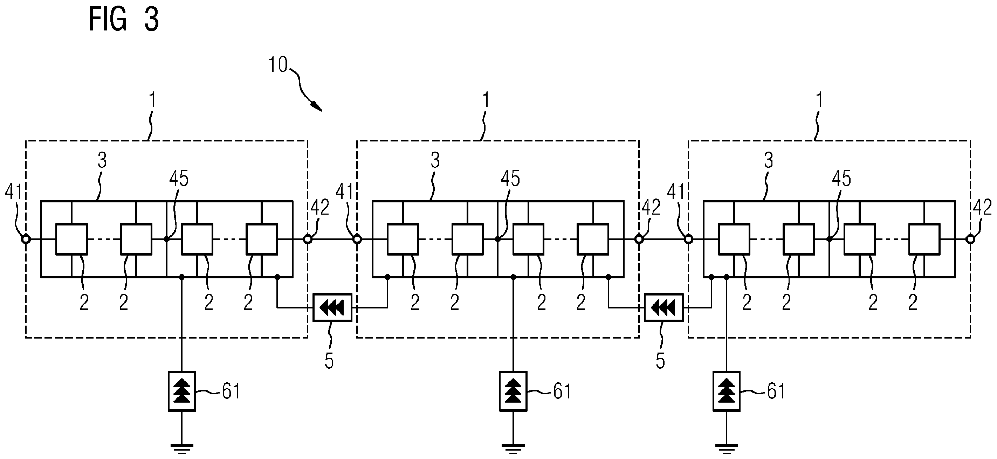

Dabei können zwei oder mehr Solareinheiten 1 elektrisch in Reihe angeordnet werden. Diese in Reihe angeordneten Solareinheiten 1 ergeben eine Solargruppeneinheit 10. Eine derartige Solargruppeneinheit 10 zeigt FIG 3. Zur Vermeidung von Wiederholungen wird auf die Beschreibung zu den Figuren 1 und 2 sowie auf die dort eingeführten Bezugszeichen verwiesen. Die Trägereinheiten 3 der einzelnen Solareinheiten 1 sind über Isolatoren 5 voneinander isoliert. Darüber hinaus sind die Trägereinheiten jeweils mittels eines Trägerisolators 61 vom Erdpotential isoliert.

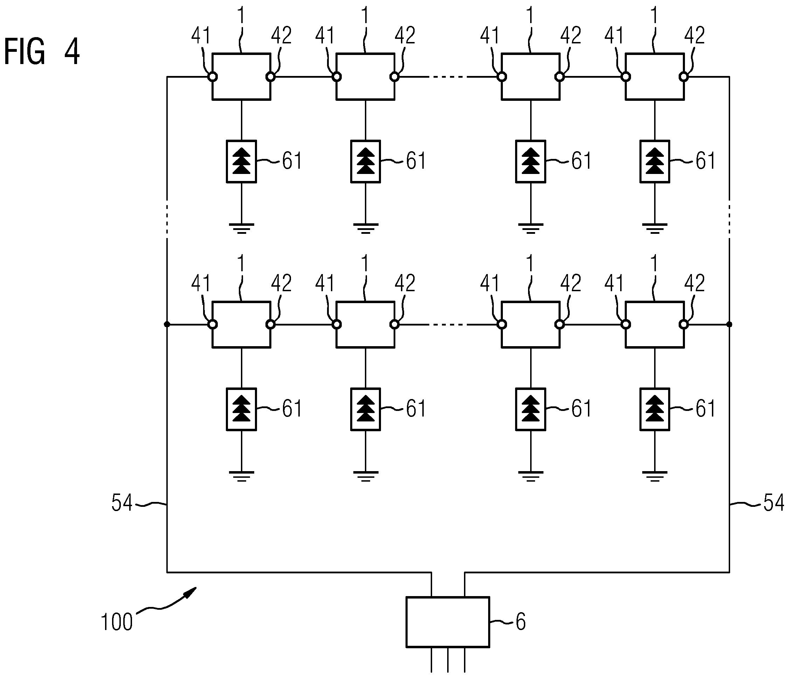

Diese Solargruppeneinheit 10 wird an den Anschlüssen der in Reihe angeordneten Solareinheiten 1 beispielsweise mittels einer Mittelspannungssammelschiene 54 mit einem Stromrichter 6 verbunden, wobei der Stromrichter 6 als Mittelspannungsstromrichter ausgebildet ist. Eine derartige Anordnung zeigt FIG 4. Zur Vermeidung von Wiederholungen wird auf die Beschreibung zu den Figuren 1 bis 3 sowie auf die dort eingeführten Bezugszeichen verwiesen. An der Gleichspannungsseite des Stromrichters 6 ist dieser mit den Solarmodulen 2 der Solargruppeneinheit 10 verbunden. Dabei kann nur eine Solargruppeneinheit 10 mit dem Stromrichter 6 verbunden sein. Alternativ ist es möglich, dass eine Parallelschaltung von zwei oder mehr, also mindestens zwei, Solargruppeneinheiten 10 mit der Gleichspannungsseite des Stromrichters 6 verbunden ist. Aus Gründen der Übersichtlichkeit wurde auf die Darstellung der Isolatoren 5 zwischen den Solareinheiten 1 verzichtet, die entsprechend der FIG 3 auch in diesem Ausführungsbeispiel angeordnet sind und die Trägereinheiten 3 der einzelnen Solareinheiten 1 elektrisch voneinander isolieren.

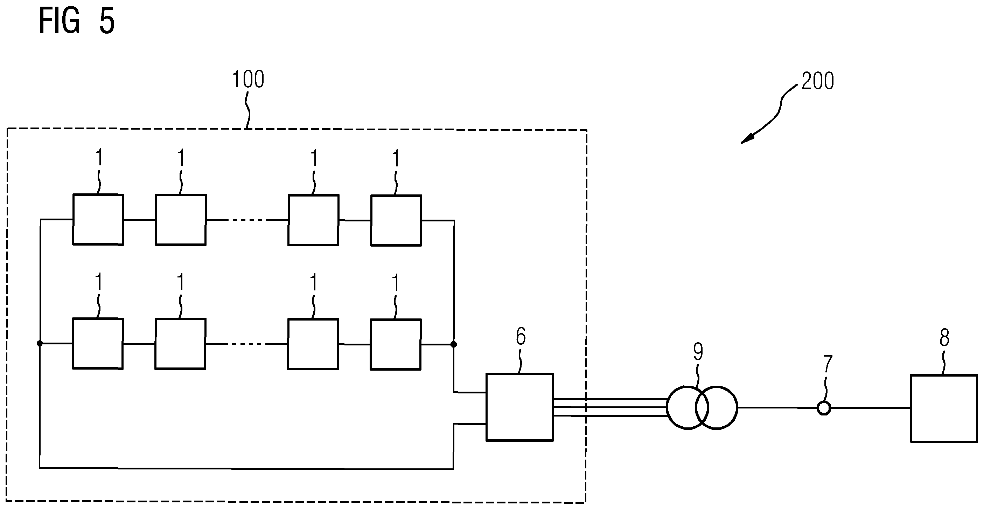

Die FIG 5 zeigt ein Solarerzeugungssystem 200 mit einer Solarerzeugungseinheit 100, einem Transformator 9 und einem Netzanschlusspunkt 7 als Zugang zu einem Energieversorgungsnetz 8. Zur Vermeidung von Wiederholungen wird auf die Beschreibung zu den Figuren 1 bis 4 sowie auf die dort eingeführten Bezugszeichen verwiesen. Die vom Stromrichter 6 erzeugte Wechselspannung kann, da es sich um eine Spannung im Mittelspannungsbereich handelt, besonders verlustarm und damit wirtschaftlich auch über längere Entfernungen wie beispielsweise mehr als 1 km, insbesondere auch über mehr als 10 km, zu einem Transformator 9 transportiert werden, der sich in der Umgebung des Netzanschlusspunktes 7 befindet. Dieser Transformator 9 passt die durch den Mittelspannungsstromrichter 6 erzeugte Mittelspannung an das Spannungsniveau des Energieversorgungsnetzes 8 an. Dazu ist der Transformator 9 mit einer ersten Wicklung mit dem Stromrichter 6 und mit einer zweiten Wicklung mit dem Netzanschlusspunkt 7 verbunden. Dadurch wird eine galvanische Trennung zwischen dem der Solargruppeneinheit 100 und dem Energieversorgungsnetz 8 erzielt. Mit dieser Anordnung kann die in den Solarmodulen 2 erzeugte elektrische Energie mittels des vorgeschlagenen Aufbaus unter Verwendung eines Mittelspannungsstromrichters 6 besonders wirtschaftlich in das Energieversorgungsnetz 8 eingespeist werden.

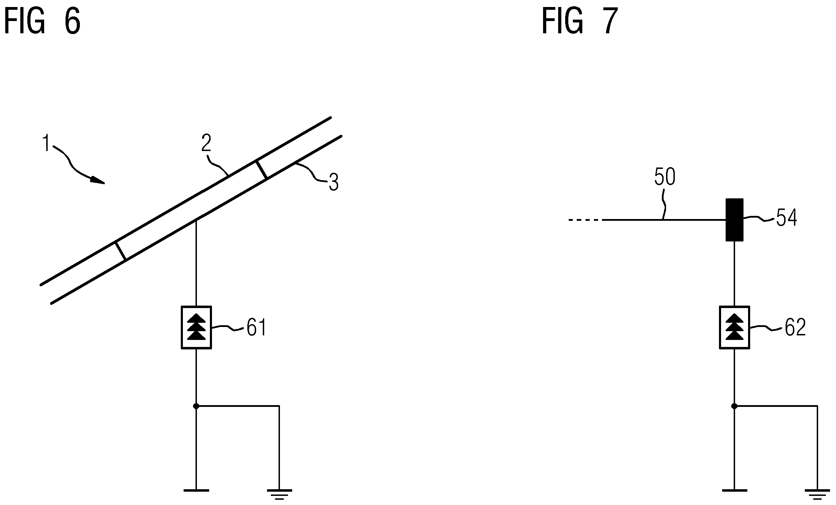

Die FIG 6 zeigt den mechanischen Aufbau der Komponenten Solarmodul 2 und Trägereinheit 3 einer Solareinheit 1. Zur Vermeidung von Wiederholungen wird auf die Beschreibung zu den Figuren 1 bis 5 sowie auf die dort eingeführten Bezugszeichen verwiesen. Die Trägereinheit 3 dient zum Anbringen des Gehäuses des Solarmoduls 2. Dabei wird die Trägereinheit 3 beispielsweise mittels eines Trägerisolators 61 vom Erdpotential isoliert. Damit ist das elektrische Potential der Trägereinheit unabhängig vom Erdpotential vorgebbar. Dabei kann der Isolator in einer Höhe angeordnet sein, dass dieser von Personen nicht berührt werden kann, um damit eine Berührsicherheit sicherzustellen. Der untere Teil dieses Trägers kann dann geerdet werden und erfüllt die Anforderungen an die Berührsicherheit. In einer bestimmten Höhe, die unter anderem von der im Betrieb an der Trägereinheit 3 anliegenden Spannung abhängt, wird der Trägerisolator 61 angeordnet. Die Berührsicherheit des vom Erdpotential getrennten Teils dieser Anordnung, die auch die Trägereinheit umfasst, wird dann aufgrund einer hinreichenden Höhe dieser Anordnung sichergestellt.

Auf die gleiche Art kann auch die Berührsicherheit der Mittelspannungssammelschiene 54 erfolgen, indem diese in hinreichende Höhe an einem Träger angeordnet ist. Ein Ausführungsbeispiel dafür zeigt FIG 7. Zur Vermeidung von Wiederholungen wird auf die Beschreibung zu den Figuren 1 bis 6 sowie auf die dort eingeführten Bezugszeichen verwiesen. Der untere Teil des Trägers kann aus Gründen der Berührsicherheit geerdet sein und erst an einem nicht mehr erreichbaren Teil des Trägers ist ein Sammelschienenisolator 62 angeordnet, der die Mittelspannungssammelschiene 54 vom Erdpotential trennt. Die elektrische Verbindung zwischen der Mittelspannungssammelschiene 54 den hier nicht dargestellten Solarmodulen 2 der Solareinheiten 1 oder Solargruppeneinheiten 10 kann für Niederspannung ausgelegt sein und beispielsweise als Niederspannungskabel 50 ausgebildet sein.

## Patentansprüche

1. Solargruppeneinheit (10) aufweisend mindestens zwei Solareinheiten (1) mit jeweils einem ersten Anschluss (41) und einem zweiten Anschluss (42), wobei die Solareinheiten (1) jeweils
- eine Vielzahl von Solarmodulen (2) und
- eine Trägereinheit (3)
aufweisen, wobei die Solarmodule (2) bezüglich ihrer Isolationsfestigkeit eine Isolationsgleichspannung aufweisen, wobei die Solarmodule (2) zwischen dem ersten Anschluss (41) und dem zweiten Anschluss (42) in einer Reihenschaltung (4) angeordnet sind, wobei ein Anschlusspunkt (45) derart an einer elektrischen Verbindung zwischen zwei der in der Reihenschaltung (4) angeordneten Solarmodule (2) angeordnet ist, dass der Betrag einer ersten durch die zwischen dem ersten Anschluss (41) und dem Anschlusspunkt (45) angeordneten Solarmodule (2) erzeugbaren Spannung (U₁) und der Betrag einer zweiten durch die zwischen dem zweiten Anschluss (42) und dem Anschlusspunkt (45) angeordneten Solarmodule (2) erzeugbaren Spannung (U₂) jeweils kleiner ist als die Isolationsgleichspannung, wobei die Solarmodule (2) in oder an der Trägereinheit (3) angeordnet sind, wobei die Trägereinheit (3) zumindest teilweise elektrisch leitfähig ausgebildet ist und mit dem Anschlusspunkt (45) elektrisch leitend verbunden ist, wobei die Solareinheiten (1) bezüglich ihrer ersten Anschlüsse (41) und zweiten Anschlüsse (42) elektrisch in Reihe angeordnet sind,
**dadurch gekennzeichnet, dass** die Trägereinheiten (3) der jeweiligen Solarmodule (2) mittels eines Isolators (5) elektrisch isoliert zueinander angeordnet sind, wobei der Isolator (5) als Bauteil ausgebildet ist.

2. Solargruppeneinheit (10) nach Anspruch 1, wobei der Isolator (5) eine Isolationsspannung aufweist, die größer oder gleich ist wie die doppelte Isolationsgleichspannung der Solarmodule (3).

3. Solargruppeneinheit (10) nach einem der Ansprüche 1 oder 2, wobei die Isolationsfestigkeit der Solarmodule (2) eine Isolationsgleichspannung von bis zu 1,5kV DC aufweisen.

4. Solargruppeneinheit (10) nach einem der Ansprüche 1 bis 3, wobei der Anschlusspunkt (45) mittig in Bezug auf die Solarmodule (2) der Reihenschaltung (4) angeordnet ist.

5. Solarerzeugungseinheit (100), aufweisend
- einen Stromrichter (6)
- mindestens eine Solargruppeneinheit (10) nach einem Ansprüche 1 bis 4,
wobei der Stromrichter (6) als Mittelspannungsstromrichter ausgebildet ist und eine Gleichspannungsseite und eine Wechselspannungsseite aufweist, wobei die Solareinheit (1) und/oder die Solargruppeneinheit (10) mit der Gleichspannungsseite des Stromrichters (6) elektrisch verbunden ist.

6. Solarerzeugungssystem (200), aufweisend:
- mindestens eine Solarerzeugungseinheit (100) nach Anspruch 5,
- einen Netzanschlusspunkt (7) zur Verbindung der Solarerzeugungseinheit (100) mit einem Energieversorgungsnetz (8) und
- einen Transformator (9),
wobei der Transformator (9) mit der Wechselspannungsseite des Stromrichters (6) und mit dem Netzanschlusspunkt (7) verbunden ist.

7. Verfahren zum Einspeisen von elektrischer Energie mittels einer Solargruppeneinheit (10) nach einem der Ansprüche 1 bis 4, einer Solarerzeugungseinheit (100) nach Anspruch 5 oder eines Solarerzeugungssystems (200) nach Anspruch 6, wobei eine durch die Solarmodule (2) erzeugte elektrische Energie mittels einer Wechselspannung im Mittelspannungsbereich in ein Energieversorgungsnetz (8) eingespeist wird.

## Claims

1. Solar group unit (10) having at least two solar units (1) each with a first connection (41) and a second connection (42), wherein the solar units (1) each have
- a multiplicity of solar modules (2) and
- a carrier unit (3),
wherein the solar modules (2) have a DC insulation voltage with respect to their insulation resistance, wherein the solar modules (2) are arranged between the first connection (41) and the second connection (42) in a series connection (4), wherein a connection point (45) is arranged at an electrical connection between two of the solar modules (2) arranged in the series connection (4) in such a way that the value of a first voltage (U₁) able to be generated by the solar modules (2) arranged between the first connection (41) and the connection point (45) and the absolute value of a second voltage (U₂) able to be generated by the solar modules (2) arranged between the second connection (42) and the connection point (45) are each lower than the DC insulation voltage, wherein the solar modules (2) are arranged in or on the carrier unit (3), wherein the carrier unit (3) is designed to be at least partly electrically conductive and is electrically conductively connected to the connection point (45), wherein the solar units (1) are arranged electrically in series with respect to their first connections (41) and second connections (42),
**characterized in that** the carrier units (3) of the respective solar modules (2) are arranged electrically insulated from one another by means of an insulator (5), wherein the insulator (5) is designed as a component.

2. Solar group unit (10) according to Claim 1, wherein the insulator (5) has an insulation voltage which is greater than or equal to twice the DC insulation voltage of the solar modules (3).

3. Solar group unit (10) according to either of Claims 1 and 2, wherein the insulation resistance of the solar modules (2) has a DC insulation voltage of up to 1.5 kV DC.

4. Solar group unit (10) according to one of Claims 1 to 3, wherein the connection point (45) is arranged centrally with respect to the solar modules (2) in the series connection (4).

5. Solar generation unit (100), having
- a power converter (6)
- at least one solar group unit (10) according to one of Claims 1 to 4,
wherein the power converter (6) is designed as a medium-voltage power converter and has a DC-voltage side and an AC-voltage side, wherein the solar unit (1) and/or the solar group unit (10) are/is electrically connected to the DC-voltage side of the power converter (6).

6. Solar generation system (200), having:
- at least one solar generation unit (100) according to Claim 5,
- a grid connection point (7) for connecting the solar generation unit (100) to an energy supply grid (8), and
- a transformer (9),
wherein the transformer (9) is connected to the AC-voltage side of the power converter (6) and to the grid connection point (7).

7. Method for feeding in electrical energy by means of a solar group unit (10) according to one of Claims 1 to 4, a solar generation unit (100) according to Claim 5 or a solar generation system (200) according to Claim 6, wherein an electrical energy generated by the solar modules (2) is fed into an energy supply grid (8) by means of an AC voltage in the medium-voltage range.

## Revendications

1. Unité de groupe solaire (10) comprenant au moins deux unités solaires (1) ayant chacune une première connexion (41) et une deuxième connexion (42), les unités solaires (1) comportant respectivement :
- une pluralité de modules solaires (2) et
- une unité de support (3),
les modules solaires (2) présentant une tension d'isolation en courant continu en ce qui concerne leur résistance d'isolation, les modules solaires (2) étant agencés dans un circuit en série (4) entre la première connexion (41) et la deuxième connexion (42), un point de connexion (45) étant agencé sur une connexion électrique entre deux des modules solaires (2) agencés dans le circuit en série (4) de telle sorte que la valeur d'une première tension (U₁) pouvant être générée par les modules solaires (2) agencés entre la première connexion (41) et le point de connexion (45) et la valeur d'une deuxième tension (U₂) pouvant être générée par les modules solaires (2) agencés entre la deuxième connexion (42) et le point de connexion (45) soient toutes deux inférieures à la tension d'isolation en courant continu, les modules solaires (2) étant agencés dans ou sur l'unité de support (3), l'unité de support (3) étant au moins partiellement conçue pour être électroconductrice et étant reliée de manière électroconductrice au point de connexion (45), les unités solaires (1) étant agencées électriquement en série en ce qui concerne leurs premières connexions (41) et deuxièmes connexions (42),
**caractérisée en ce que** les unités de support (3) des modules solaires (2) respectifs sont agencées de manière électriquement isolée les unes des autres au moyen d'un isolateur (5), l'isolateur (5) étant réalisé sous forme de composant.

2. Unité de groupe solaire (10) selon la revendication 1, dans laquelle l'isolateur (5) présente une tension d'isolation supérieure ou égale au double de la tension d'isolation en courant continu des modules solaires (3).

3. Unité de groupe solaire (10) selon l'une quelconque des revendications 1 ou 2, dans laquelle la résistance d'isolation des modules solaires (2) présente une tension d'isolation en courant continu allant jusqu'à 1,5 kV DC.

4. Unité de groupe solaire (10) selon l'une quelconque des revendications 1 à 3, dans laquelle le point de connexion (45) est agencé au centre par rapport aux modules solaires (2) du circuit en série (4).

5. Unité de génération solaire (100), comprenant :
- un convertisseur de puissance (6)
- au moins une unité de groupe solaire (10) selon l'une quelconque des revendications 1 à 4,
le convertisseur de puissance (6) étant réalisé sous forme de convertisseur de puissance moyenne tension et présentant un côté tension continue et un côté tension alternative, l'unité solaire (1) et/ou l'unité de groupe solaire (10) étant électriquement connectées au côté tension continue du convertisseur de puissance (6).

6. Système de génération solaire (200), comprenant :
- au moins une unité de génération solaire (100) selon la revendication 5,
- un point de connexion au réseau (7) pour la connexion de l'unité de génération solaire (100) à un réseau d'alimentation électrique (8), et
- un transformateur (9),
le transformateur (9) étant connecté au côté tension alternative du convertisseur de puissance (6) et au point de connexion au réseau (7).

7. Procédé d'injection d'énergie électrique au moyen d'une unité de groupe solaire (10) selon l'une quelconque des revendications 1 à 4, d'une unité de génération solaire (100) selon la revendication 5 ou d'un système de génération solaire (200) selon la revendication 6, dans lequel de l'énergie électrique générée par les modules solaires (2) est injectée dans un réseau d'alimentation électrique (8) au moyen d'une tension alternative se situant dans la plage des moyennes tensions.
